(19) Europäisches Patentamt
European Patent Office
Office européen des brevets

(11) EP 2 011 610 A2

(12) EUROPEAN PATENT APPLICATION

(43) Date of publication:
07.01.2009 Bulletin 2009/02

(51) Int Cl.:
*B25J 9/16* (2006.01)

(21) Application number: 08007791.0

(22) Date of filing: 22.04.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 24.04.2007 JP 2007114256

(71) Applicant: Fanuc Ltd
Yamanashi 401-0597 (JP)

(72) Inventors:
• Hatanaka, Kokoro
Minatsuru-gun
Yamanashi 401-0597 (JP)
• Sato, Takashi
Minatsuru-gun
Yamanashi 401-0597 (JP)

(74) Representative: Thum, Bernhard
Wuesthoff & Wuesthoff
Patent- und Rechtsanwälte
Schweigerstrasse 2
81541 München (DE)

(54) **Fitting device**

(57) A fitting device (10) for fitting a first fitting member held in a hand (4) mounted at the forward end of a robot arm (2) to a corresponding second fitting member, comprising a detection unit (3) for detecting the force or moment generated when the first and second fitting members come into contact with each other, and a judging unit (12) for judging, based on the force or moment detected by the detection unit (3), whether a one-point contact state prevails in which the first and second fitting members are in contact with each other at one point or a two-point contact state prevails in which the first and second fitting members are in contact with each other at least two points. In the one-point contact state, the first fitting member held in the hand is pressed against the second fitting member in the fitting direction thereby to proceed with the fitting operation while maintaining the holding posture of the robot arm (2). In the two-point contact state, the fitting operation is caused to proceed further while the holding posture of the robot arm is changeable. As a result, the first fitting member can be fitted in the second fitting member while keeping the robot arm in the normal posture.

Fig.1

EP 2 011 610 A2

**Description**

BACKGROUND OF THE INVENTION

1. Field of the Invention

This invention relates to a fitting device for fitting a fitting member held in a hand mounted at the forward end of a robot arm to another fitting member.

2. Description of the Related Art

A fitting operation has conventionally been conducted using a control rule emulating RCC (remote center compliance) by constructing a virtual compliance. Japanese Examined Patent Publication No. 04-43744 discloses one method of fitting a rod-like fitting member held in a robot hand into a fitting hole of a fitted member.

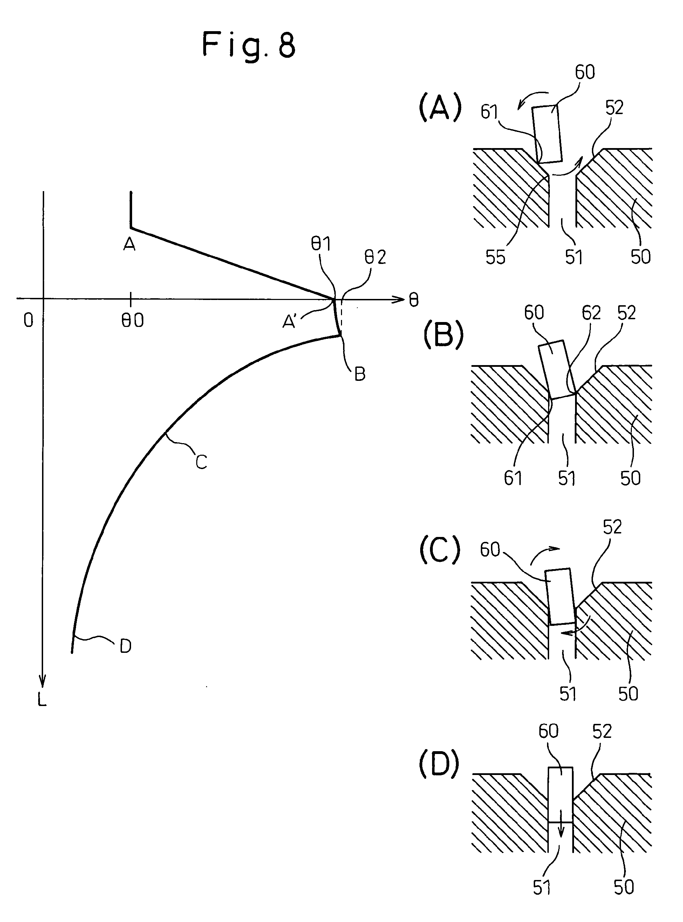

Fig. 8 is a diagram explaining a conventional fitting operation such as disclosed in "Quasi-static Assembly of Compliantly Supported Rigid Parts" by Daniel E. Whitney, Transactions of the ASME, The American Society of Mechanical Engineers, pp. 65 - 77, March 1982. According to the prior art, the use of the control rule emulating RCC causes a phenomenon similar to the aforementioned "Quasi-static Assembly of Compliantly Supported Rigid Parts" in which the fitting operation using RCC is analyzed. As shown in Fig. 8, a chamfered portion 52 is formed around a fitting hole 51 of a fitted member 50. Further, Fig. 8 shows the relationship between the insertion depth L of the fitting member 60 and the angle $\theta$ that the center line of the fitting member 60 forms to the center line of the fitting hole 51. Incidentally, the origin 0 of the insertion depth L corresponds to an inner end portion 55 of the chamfered portion 52.

In Fig. 8, assuming that the fitting member 60 is held at an angle of $\theta 0$ ($\theta 0 > 0$) by a robot hand (not shown). With the movement of the robot hand in the fitting direction toward the fitted member 50, as shown, the bottom edge portion 61 of the fitting member 60 comes into contact with the chamfered portion 52 of the fitted member 50 only at one point (corresponding to a point A in the relationship between the fitting depth L and the angle $\theta$).

In the "Quasi-static Assembly of Compliantly Supported Rigid Parts", the robot hand is flexibly controlled, and therefore, the fitting member 60 rotates counterclockwise after coming into contact at point A. As a result, the angle $\theta 0$ is increased. With a further movement of the fitting member 60 in the fitting direction, the edge portion 61 of the fitting member 60 advances into the fitting hole 51 beyond the inner end portion 55 of the chamfered portion 52 (point A'). In the process, the angle $\theta$ is $\theta 1$. As a result, the angle $\theta$ is slightly increased further from the angle $\theta 1$.

With another further movement of the fitting member 60 in the fitting direction, another bottom edge portion 62 of the fitting member 60 comes into contact with the chamfered portion 52 on the opposite side (point B). In the process, the angle $\theta$ is $\theta 2$.

After that, with a still further movement of the fitting member 60 in the fitting direction, the fitting member 60 is partially fitted in the fitting hole 51 and rotated clockwise (point C). As a result, the angle $\theta$ is decreased from the angle $\theta 2$, and with the progress of fitting of the fitting member 60 in the fitting hole 51, the angle $\theta$ is decreased from $\theta 0$ and approaches zero (point D). In the method disclosed in "Quasi-static Assembly of Compliantly Supported Rigid Parts", therefore, the fitting operation is conducted while changing the posture of the fitting member 60 after the edge portion 61 of the fitting member 60 comes into contact with the chamfered portion 52.

Understandably, the angle $\theta$ of the fitting member 60 finally becomes almost zero when the fitting member 60 is completely fitted in the fitted member 50. However, if the fitting member 60 comes into contact with the chamfered portion 52 of the fitted member 50 at one point (point A) in the prior art as shown in Fig. 8, a situation may occur in which the angle $\theta$ is increased and the posture of the fitting member 60 temporarily comes away from the normal posture (angle $\theta = 0$). In such a case, after coming into contact at two points, the fitting member 60 may be jammed in the fitting hole 51 or engaged on the inner surface of the fitting hole 51, often resulting in a fitting operation failure.

Incidentally, the direction in which the posture of the fitting member 60 should be changed cannot be determined by the force and/or the moment exerted when the fitting member 60 is in contact with the chamfered portion 52 at one point. The reason is that the direction of the force and/or moment is determined in accordance with which part of the fitting member 60 is in contact with which part of the chamfered portion 52, but not in accordance with the difference between the present posture and the normal posture of the fitting member 60.

The present invention has been achieved in view of this situation, and the object thereof is to provide a fitting device whereby the fitting member can be fitted in the fitted member without causing the fitting member to come away from the normal posture during the fitting operation.

SUMMARY OF THE INVENTION

In order to achieve the object described above, according to a first aspect of the invention, there is provided a fitting device for fitting a first fitting member held in a hand mounted at the forward end of a robot arm to a corresponding second fitting member, comprising a detection means for detecting the force or moment generated when the first and second fitting members come into contact with each other, and a judging means for judging, based on the force or moment detected by the detection means, whether a one-point contact state prevails in which the first and second fitting members are in contact with each other at one point or a two-point contact state prevails in which the first and second fitting members are in contact with each other at least two points, wherein if the one-point contact state is judged by the judging means with the first and second fitting members fitted with each other, the first fitting member held in the hand is pressed against the second fitting member in the fitting direction thereby to proceed with the fitting operation while maintaining the holding posture of the robot arm, and if it is judged by the judging means that the one-point contact state has transferred to the two-point contact state, the fitting operation is caused to proceed further while the holding posture of the robot arm is changeable.

Specifically, in the first aspect, if the first and second fitting members are in the one-point contact state and in contact with each other at one point, the posture change of the first fitting member is suppressed. As long as the first fitting member is in contact with the second fitting member at one point, the first fitting member does not change from the normal posture. Therefore, during fitting work, the first and second fitting members are not jammed or engaged with each other and the fitting operation can be performed satisfactorily.

According to a second aspect of the invention, there is provided a fitting device in the first aspect, wherein the detection means is a force sensor arranged between the hand and the robot arm.

Specifically, in the second aspect, the force or moment can be detected more accurately.

According to a third aspect of the invention, there is provided a fitting device in the first or second aspect, wherein the detection means is an estimation means for estimating at least one of the force and the moment based on the current value of an electric motor for driving the robot arm.

Specifically, in the third aspect, the force or the moment can be detected without using the force sensor.

The above and other objects, features and advantages will be made more apparent by the detailed description of typical embodiments of the invention taken in conjunction with the accompanying drawings.

BRIEF DESCRIPTION OF THE DRAWINGS

Fig. 1 is a schematic diagram showing a fitting device according to this invention.
Fig. 2 is an enlarged sectional view of a fitting member and a fitted member.
Fig. 3 is a function block diagram showing a fitting device according to the invention.
Fig. 4 is a flowchart showing the operation of a fitting device according to the invention.
Fig. 5 is a flowchart showing the fitting operation in detail.
Fig. 6 is a partly enlarged view showing the chamfered portion of the fitted member in enlarged form.
Fig. 7 is a diagram explaining the fitting work according to the invention.
Fig. 8 is a diagram explaining the conventional fitting operation.

DETAILED DESCRIPTION

An embodiment of the invention will be explained below with reference to the accompanying drawings. In the drawings, similar members are designated by similar reference numerals, respectively. To facilitate understanding, the scale of these drawings has been appropriately changed as required.

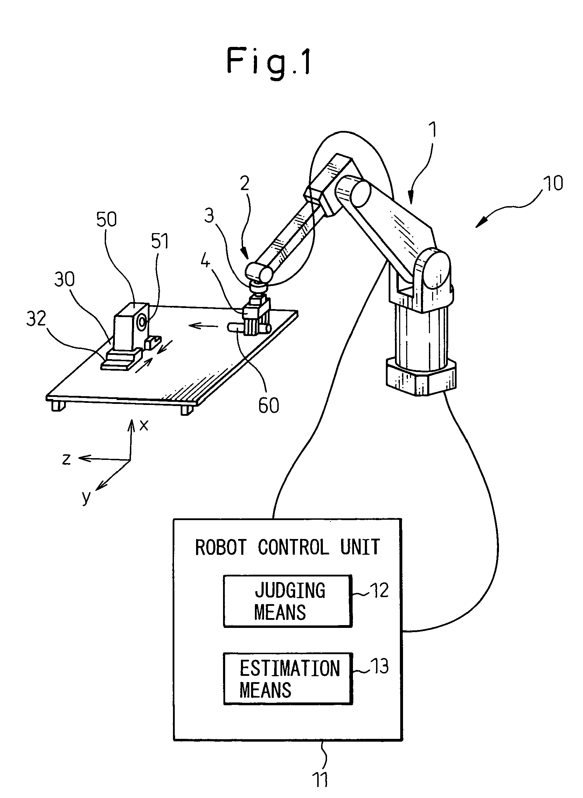

Fig. 1 is a schematic diagram showing a fitting device according to the invention. A fitting device 10 shown in Fig. 1 includes a robot 1 and a robot control unit 11. The robot 1 is a six-axis vertical multijoint robot. A hand 4 is mounted at the forward end of the robot arm 2 of the robot 1. As shown, a force sensor 3 is arranged between the robot arm 2 and the hand 4. The force sensor 3 detects the force and/or the moment exerted on the hand 4.

The robot 1 and the force sensor 3 are connected to the robot control unit 11. The robot control unit 11 is a digital computer for controlling the whole operation of the robot 1 of the fitting device 10. Furthermore, the robot control unit 11 includes a judging means 12 for judging whether a one-point contact state prevails in which a fitting member 60 and a fitted member 50 described later are in contact with each other only at one point or a two-point contact state prevails in which the fitting member 60 and the fitting member 50 are in contact with each other at least two points.

Further, the robot control unit 11 includes an estimation means 13. The estimation means 13 estimates the force and/or the moment exerted on the hand 4 based on the current value of a drive motor (not shown) for driving the robot arm 2 of the robot 1. In other words, the estimation means 13 is used to determine the force and/or the moment on behalf of the force sensor 3. Incidentally, a torque sensor (not shown) may be arranged on each axis of the robot 1, and the force and/or the moment may be estimated from the torque detection values obtained from the torque sensors.

In Fig. 1, the cylindrical fitting member 60 is held by the hand 4 of the robot 1. The fitted member 50 having the fitting hole 51 engageable with the fitting member 60 is arranged in opposed relation with the fitting member 60. In Fig. 1, the fitted member 50 is fixed at a predetermined position on a support table 30 by a holding tool 32. Incidentally, as shown in Fig. 1, assuming that the fitting direction of the fitting member 60 is set along the Z axis, and the X and Y axes are arranged in the plane orthogonal to the Z axis.

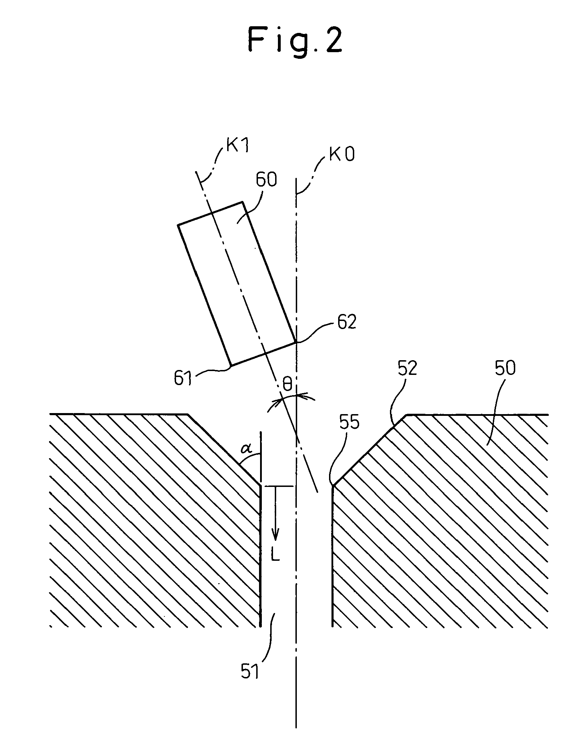

Fig. 2 is an enlarged sectional view of the fitting member and the fitted member. As shown, a chamfered portion 52 is formed at the end portion of the fitting hole 51 formed in the fitted member 50. According to the embodiment shown in Fig. 2, the angle α of the chamfered portion 52 is 45°. However, the angle $\alpha$, is not limited to 45° and may assume another value.

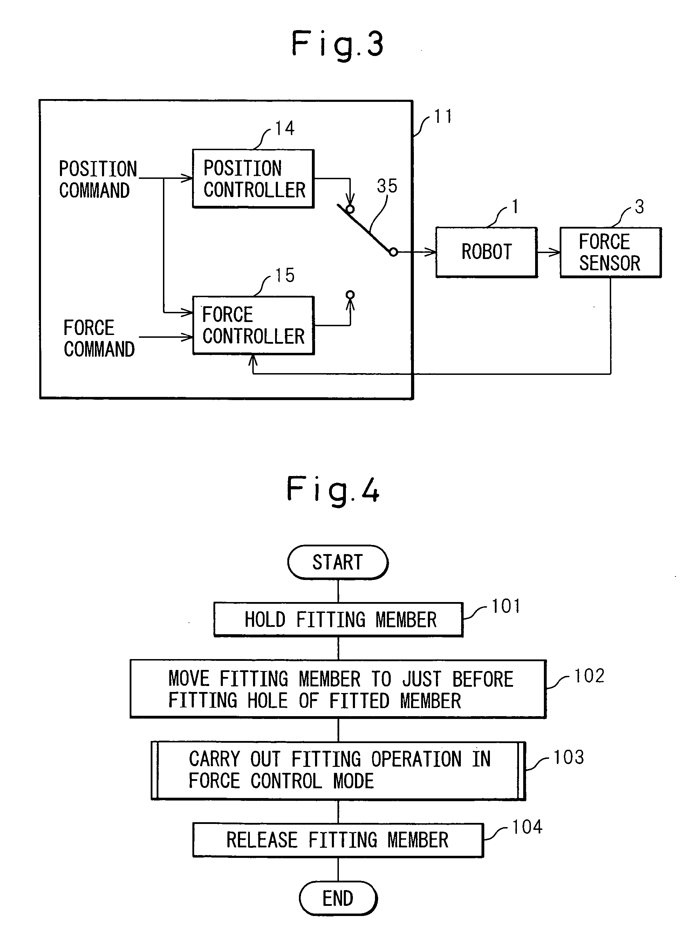

Fig. 3 is a function block diagram showing the configuration of the control rule of the fitting device according to the invention. As shown in Fig. 3, the robot control unit 11 has a position controller 14 and a force controller 15. The position controller 14 executes a position control of the robot 1 on the basis of a position command generated by a predetermined method.

Whereas the force controller 15, executes a force control of the robot 1 based on the force detection value obtained from the force sensor 3 and the position command and the force command generated by a predetermined method. Specifically, the force controller 15 includes a force control loop in X, Y and Z directions and a force control loop around X, Y and Z axes. The force controller 15 executes at least one of these six force control loops.

As shown in Fig. 3, the robot control unit 11 includes a change-over switch 35. The change-over switch 35 switches between the position control mode by the position controller 14 and the force control mode by the force controller 15. Normally, the change-over switch 35 is set to control the robot 1 in position control mode. In the case where the fitting operation is conducted to fit the fitting member 60 in the fitted member 50, the change-over switch 35 is set to control the robot 1 in force control mode.

With reference to the flowchart of Fig. 4 showing the operation of the fitting device, the fitting operation of the fitting device 10 according to the invention will be explained. First, under the position control mode, the fitting member 60 is held by the hand 4 of the robot 1 (step 101). Then, the fitting member 60 thus held is moved to a position close to the fitting hole 51 of the fitted member 50 (step 102).

After that, the position control mode is changed to the force control mode by the change-over switch 35, and the fitting operation described later is carried out in step 103. Upon completion of the fitting operation, the fitting member 60 is released from the hand 4 (step 105) thereby to finish the process.

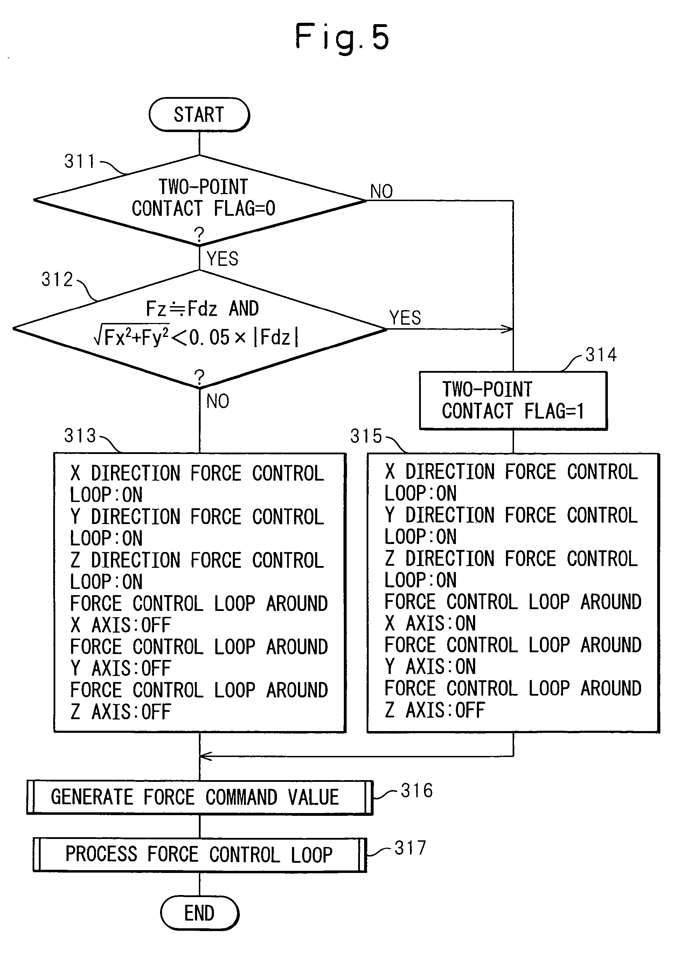

Fig. 5 is a flowchart showing the fitting operation. The process shown in Fig. 5 is repeatedly executed at intervals of a predetermined period in the fitting operation. The robot control unit 11 includes a two-point contact flag indicating that the two-point contact state is prevailing, and step 311 first judges whether the two-point contact flag is raised or not.

If the two-point contact flag is not raised, the process proceeds to step 312. In step 312, the judging means 12 judges whether the one-point contact state is prevailing with the fitting member 60 and the fitted member 50 in contact with each other at one point or the two-point contact state is prevailing with the fitting member 60 and the fitted member 50 in contact with each other at least two points.

A specific judging method by the judging means 12 will be explained below. First, the force sensor 3 detects the forces Fx, Fy and Fz in X, Y and Z directions, respectively. Then, it is judged whether the force Fz in Z direction is substantially equal to a predetermined force Fdz or not.

If the force Fz in Z direction is substantially equal to Fdz, the resultant force of the force Fx in X direction and the force Fy in Y direction is calculated. Then, it is judged whether the resultant force $\sqrt{(Fx^2 + Fy^2)}$ is considerably small or not, or specifically, whether the resultant force of these forces is smaller than 0.05·|Fdz| or not.

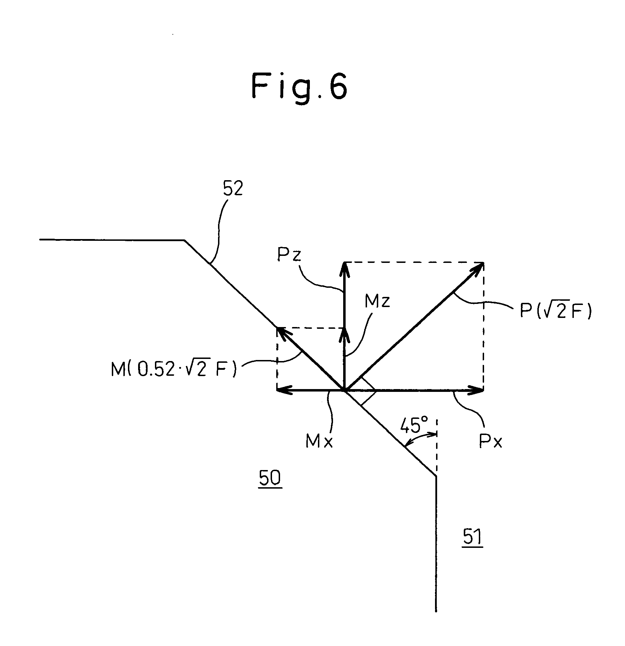

Fig. 6 is a partly enlarged view showing the chamfered portion of the fitted member in enlarged form. Fig. 6 shows the state in which the fitting member 60 (not shown in Fig. 6) is in contact with the chamfered portion 52 of the fitted member 50 at one point and sliding along the chamfered portion 52 in the case where the posture error of the fitting member 60 is zero (i.e. angle θ = 0).

Assuming that the magnitude of the pressure P perpendicular to the chamfered portion 52 generated by the contact between the fitting member 60 and the chamfered portion 52 is ($\sqrt{2}$) F. If the dynamic friction coefficient between the fitting member 60 and the chamfered portion 52 is 0.52, the magnitude of the dynamic friction force M is expressed as 0.52 · ($\sqrt{2}$) F. The pressure P and the dynamic friction force M, when decomposed into the components in Z and X directions (including Y direction) result in Pz, Px and Mz, Mx, respectively, as shown in Fig. 6.

If the angle $\alpha$ of the chamfered portion 52 is 45°, the resultant force Fz of the forces exerted in Z direction is given as Fz (= Pz + Mz) = 1.52F, while the resultant force Fxy of the forces exerted in X and Y directions as Fxy (= Px - Mx) = 0.48F. Therefore, the ratio between the force Fz in Z direction and the force Fxy in X and Y directions is given as Fxy/Fz = 0.48/1.52 ≒ 0.32. Incidentally, a substantially similar ratio of the forces is obtained even in the case where the posture error exists in the range of ±2°.

As described above, in the one-point contact state, the force is exerted to some degree along X and Y directions (including Y direction) as well as along Z direction. Once the fitting member 60 and the fitted member 50 transfer to the two-point contact state, the force control operation of parallel components converges the force Fxy in X and Y directions to zero, and converges the force Fz to a predetermined value Fdz.

If Fz is substantially equal to the predetermined value Fdz, and the resultant force $Fxy \ (= \sqrt{(Fx^2 + Fy^2)})$ is considerably smaller than Fz, it is judged that the two-point contact state is prevailing, however if the resultant force $Fxy \ (= \sqrt{(Fx^2 + Fy^2)})$ is not as small as compared with Fz, it is judged that the one-point contact state is prevailing. In step 312, 0.05 is employed as a value still smaller than the aforementioned ratio (= Fxy/Fz) 0.32 in consideration of a margin.

Referring again to Fig. 5, upon judgment in step 312 that the one-point contact state is prevailing, the process proceeds to step 313. In step 313, the force control loop is set in X, Y and Z directions, but not the force control loop around X, Y and Z axes. Then, based on the force command value generated in step 316, the force control loop is executed in X, Y and Z directions (step 317).

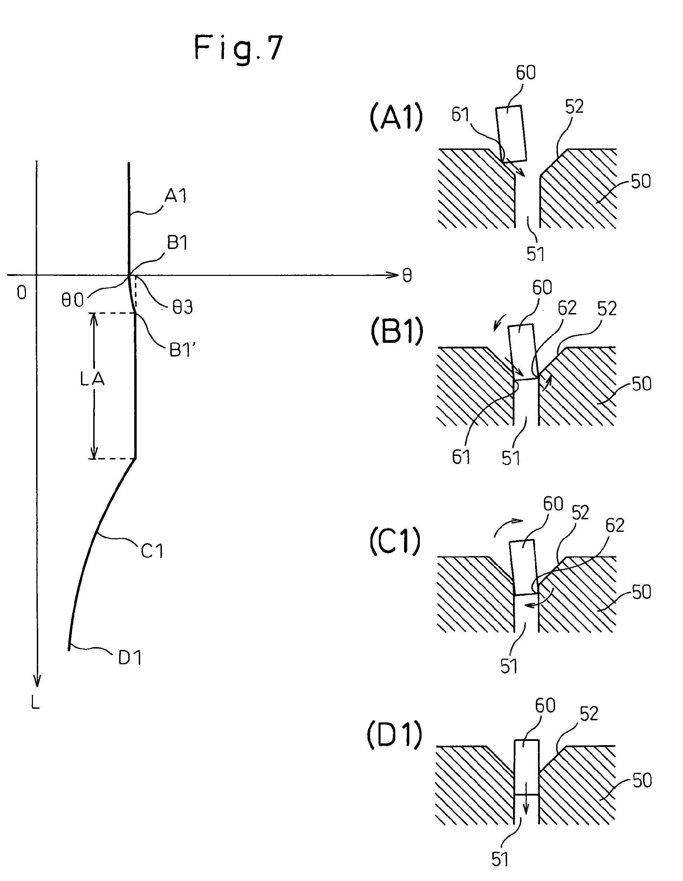

Fig. 7 is a diagram similar to Fig. 8, for explaining the fitting operation according to the invention. As shown in Fig. 7, if one edge portion 61 of the fitting member 60 begins to come into contact with the chamfered portion 52 of the fitted member 50, the one-point contact state prevails between the fitting member 60 and the fitted member 50. According to this invention, the force control loop is not set around X, Y and Z axes in one-point contact state, and therefore, the posture of the fitting member 60 remains unchanged even in the one-point contact state. With the movement of the fitting member 60 in the fitting direction, therefore, the fitting member 60 slides along the chamfered portion 52 without changing the posture thereof (point A1).

Referring to Fig. 5 again, upon judgment in step 312 that the two-point contact state prevails, the process proceeds to step 314 and the two-point contact flag is set, followed by proceeding to step 315. In step 315, the force control loop in X, Y and Z directions and around X and Y axes is set, but not around Z axis. Then, based on the force command value generated in step 316, the force control loop in X, Y and Z directions and around X and Y axes is executed in step 317.

As shown in Fig. 7, with the advance of one edge portion 61 of the fitting member 60 into the fitting hole 51, the other edge portion 62 comes into contact with the inner end portion 55 of the chamfered portion 52 to assume the two-point contact state (point B1). In the process, the angle θ of the fitting member 60 slightly increases to angle θ3 (θ0 < θ3 < θ1 < θ2). In other words, the fitting member 60 slightly changes the posture thereof to come away from the normal posture (angle θ = 0).

Then, with the advance of both the edge portions 61, 62 of the fitting member 60 into the fitting hole 51 (point B1'), the fitting member 60 moves in the fitting direction while changing the posture thereof around X and Y axes. In the case where a gap is formed between the fitting member 60 and the fitting hole 51; however, an area LA not substantially affected by the reaction in the fitting direction exists as an extension from the gap. In the area LA, the fitting member 60 advances in the fitting direction more easily than the angle θ changes, so that the fitting member 60 advances over the area LA in the fitting direction before the angle θ substantially changes.

Once the area LA is passed, the reaction is generated in the fitting direction, and therefore, the fitting member 60 further moves in the fitting direction while restoring the posture thereof to the normal posture gradually (point C1). With a further movement of the fitting member 60 in the fitting direction, the fitting member 60 further approaches toward the normal posture (D1) and finally comes to assume the normal posture (angle θ ≒ 0).

As described above, according to this invention, the posture of the fitting member 60 is controlled not to change as long as the one-point contact state prevails between the fitting member 60 and the fitted member 50 as shown in Fig. 7. In the one-point contact state, therefore, the fitting member 60 is not substantially changed in posture to come away from the normal posture (except between point B1 and point B1'). As a result, according to this invention, the fitting member 60 and the fitted member 50 are not jammed or engaged with each other during the fitting operation, and therefore, the fitting operation can be carried out satisfactorily.

Although the embodiments explained above with reference to the drawings employ a cylindrical fitting member 60, the fitting member 60 is not limited to this shape. The fitting device according to this invention is also applicable if the fitted member 50 is held in the hand 4 of the robot 1 and the fitting member 60 is supported on the holding tool 32.

The typical embodiments of the invention are explained above, and it will be understood to those skilled in the art that the aforementioned alterations and various modifications, omissions and additions can be made without departing from the scope of the invention.

**Claims**

1. A fitting device (10) for fitting a first fitting member held in a hand (4) mounted at the forward end of a robot arm (2) to a corresponding second fitting member, comprising:

   a detection means (3) for detecting selected one of the force and the moment generated when said first and second fitting members come into contact with each other, and
   a judging means (12) for judging, based on selected one of the force and the moment detected by said detection means (3), whether a one-point contact state prevails in which said first and second fitting members are in contact with each other at one point or a two-point contact state prevails in which said first and second fitting members are in contact with each other at least two points,

   wherein if said one-point contact state is judged by said judging means (12) with said first and second fitting members fitted with each other, said first fitting member held in said hand (4) is pressed against said second fitting member in the fitting direction thereby to proceed with the fitting operation while maintaining the holding posture of said robot arm (2), and wherein if it is judged by said judging means (12) that said one-point contact state has transferred to said two-point contact state, said fitting operation is caused to proceed further while the holding posture of said robot arm (2) is changeable.

2. The fitting device according to claim 1, wherein said detection means (13) is a force sensor arranged between said hand (4) and said robot arm (2).

3. The fitting device according to claim 1, wherein said detection means (3) is an estimation means (13) for estimating at least one of said force and said moment based on the current value of an electric motor for driving said robot arm (2).

# Fig.1

ROBOT CONTROL UNIT

JUDGING MEANS ~12

ESTIMATION MEANS ~13

# Fig.2

# Fig.3

POSITION COMMAND → **POSITION CONTROLLER** (14)

FORCE COMMAND → **FORCE CONTROLLER** (15)

35

**ROBOT** (1) → **FORCE SENSOR** (3)

11

# Fig.4

START

HOLD FITTING MEMBER — 101

MOVE FITTING MEMBER TO JUST BEFORE FITTING HOLE OF FITTED MEMBER — 102

CARRY OUT FITTING OPERATION IN FORCE CONTROL MODE — 103

RELEASE FITTING MEMBER — 104

END

# Fig.5

START

311 — TWO-POINT CONTACT FLAG=0 ? — NO

YES

312 — $Fz \fallingdotseq Fdz$ AND $\sqrt{Fx^2+Fy^2} < 0.05 \times |Fdz|$ ? — YES

NO

314 TWO-POINT CONTACT FLAG=1

313

X DIRECTION FORCE CONTROL LOOP:ON
Y DIRECTION FORCE CONTROL LOOP:ON
Z DIRECTION FORCE CONTROL LOOP:ON
FORCE CONTROL LOOP AROUND X AXIS:OFF
FORCE CONTROL LOOP AROUND Y AXIS:OFF
FORCE CONTROL LOOP AROUND Z AXIS:OFF

315

X DIRECTION FORCE CONTROL LOOP:ON
Y DIRECTION FORCE CONTROL LOOP:ON
Z DIRECTION FORCE CONTROL LOOP:ON
FORCE CONTROL LOOP AROUND X AXIS:ON
FORCE CONTROL LOOP AROUND Y AXIS:ON
FORCE CONTROL LOOP AROUND Z AXIS:OFF

GENERATE FORCE COMMAND VALUE — 316

PROCESS FORCE CONTROL LOOP — 317

END

# Fig.6

# Fig.7

# Fig. 8

**REFERENCES CITED IN THE DESCRIPTION**

**Patent documents cited in the description**

- JP 4043744 A

**Non-patent literature cited in the description**

- **DANIEL E. WHITNEY.** Quasi-static Assembly of Compliantly Supported Rigid Parts. *Transactions of the ASME, The American Society of Mechanical Engineers,* March 1982, 65-77